# EUROPEAN PATENT APPLICATION

(11) **EP 2 796 747 A1**
(43) Date of publication of application: **29.10.2014**
(21) Application number: 12861024.3
(22) Date of filing: 05.12.2012
(51) Int. Cl.: F16F 15/04, B61F 5/10, F16F 9/05

(54) **AIR SPRING**

(30) Priority: 20.12.2011 JP 2011278269
(71) Applicant: Bridgestone Corporation, Tokyo 104-8340 (JP)
(72) Inventor: ARAI, Jun, Yokohama-shi Kanagawa 244-8510 (JP)
(74) Representative: Oxley, Robin John George
(86) International application number: PCT/JP2012/007786
(87) International publication number: WO 2013/094136

(57) **Abstract**

An upper face plate, a lower face plate, and a cylindrical flexible film body with opposite ends respectively connected air-tightly to the upper face plate and the lower face plate are provided. A pressurized gas of a pressure equal to or greater than atmospheric pressure is sealed within. A sliding plate of polyethylene resin with a weight average molecular weight of two million or more is provided on at least one of mutually opposing faces of the upper face plate and the lower face plate.

## Description

### TECHNICAL FIELD

The present invention relates to an air spring that can be used in a railway vehicle, an industrial machine, an automobile, or the like.

### BACKGROUND ART

JP 2010-127350 A (PTL 1) discloses an air spring device that includes an upper face plate, a lower face plate, and a cylindrical flexible film body with opposite ends respectively connected air-tightly to the face plates. The air spring device has a pressurized gas sealed within, such as pressurized air, equal to or greater than atmospheric pressure. PTL 1 further discloses a vehicle suspension in which a shear spring means made mainly of rubber, for example a frusto-conical shaped spring means, is mounted on the upper face plate side or the lower face plate side of the air spring and is mainly subjected to shear deformation due to input in the vertical direction.

In this vehicle suspension, the upper face plate and lower face plate are made to be slidable horizontally while in surface contact with each other so as to allow for horizontal displacement in a state where air is not provided (a punctured state).

Therefore, PTL 1 proposes a technique to provide, on the lower face plate, a fluorocarbon polymer sliding plate that abuts a sliding surface formed on the lower face of the upper face plate, and to form a coated film by coating the sliding surface with fluorocarbon polymer or molybdenum disulfide after zinc phosphate treatment, so as to reduce the friction when the upper face plate and the lower face plate slide relative to each other.

### CITATION LIST

### Patent Literature

PTL 1: JP 2010-127350 A

### SUMMARY OF INVENTION

### (Technical Problem)

The present invention proposes an air spring that can more effectively reduce the friction force on the face plates.

### (Solution to Problem)

An air spring according to the present invention includes an upper face plate, a lower face plate, and a cylindrical flexible film body with ends respectively connected air-tightly to the upper face plate and the lower face plate, a pressurized gas of a pressure equal to or greater than atmospheric pressure being sealed within the air spring, and a sliding plate of polyethylene resin with a weight average molecular weight of two million or more being provided on at least one of mutually opposing faces of the upper face plate and the lower face plate.

### (Advantageous Effect of Invention)

In this air spring, by providing a sliding plate of polyethylene resin with a weight average molecular weight of two million or more on at least one of mutually opposing faces of the upper face plate and the lower face plate, the friction force acting between the sliding surfaces when the upper face plate and the lower face plate slide horizontally against each other can be reduced effectively as compared to a conventional technique, in particular at the time of puncture or the like. Additionally, high wear resistance can be achieved based on the inherent characteristics of high molecular weight polyethylene resin.

In other words, when the weight average molecular weight is less than two million, the air spring itself can be reduced in weight, yet it may not be possible to achieve a sufficiently small coefficient of friction or sufficient wear characteristics. Furthermore, injection molding of the upper face plate and the like may become difficult, thus making it difficult to produce such components.

### BRIEF DESCRIPTION OF DRAWINGS

The present invention will be further described below with reference to the accompanying drawings, wherein:
FIG. 1 is a longitudinal sectional view showing an embodiment of an air spring according to the present invention with laminated rubber attached thereto;
FIG. 2 is a plan view of the lower face plate showing the grooves provided in the lower face plate of the air spring in FIG. 1;
FIG. 3 is a longitudinal sectional view showing the lower face plate of the air spring device in the example; and
FIG. 4 is a graph showing the results of tests to measure the coefficient of friction for the example and the comparative examples.

### DESCRIPTION OF EMBODIMENTS

The following describes an embodiment of the present invention in detail with reference to the drawings.

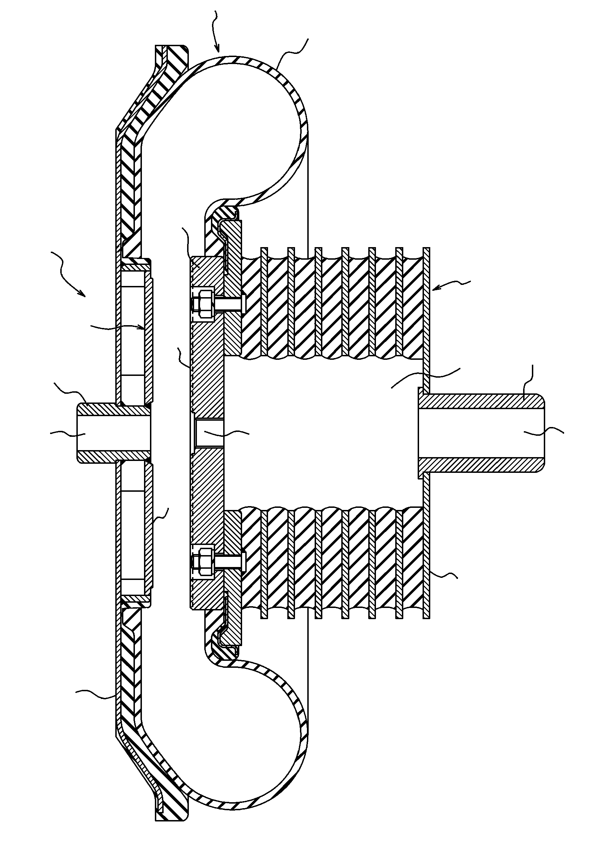

In FIG. 1, reference numeral 1 denotes the entire air spring device, 2 denotes an upper face plate attached, for example, to the side of a vehicle body in a horizontal position, 3 denotes a lower face plate, and 4 denotes a cylindrical flexible film body, having a self-seal structure in FIG. 1, and having its ends air-tightly connected respectively to the face plates 2 and 3. Elements 2, 3, and 4 constitute an air spring 5 by enclosing, in an interior space thereof, a gas of a predetermined pressure so that the space forms a gas chamber. The gas may be air, an inert gas, or the like.

In this case, a boss 2a is provided on the upper face plate 2 of the air spring 5 as a passage diaphragm.

In the view shown in FIG. 1, laminated rubber 6 is joined to the lower face of the lower face plate 3 in the air spring 5. The laminated rubber 6 has a horizontally laminated structure with a predetermined number of alternating annular rubber plates and annular rigid plates. A gas passage 3a formed in the central portion of the lower face plate 3 communicates with a non-illustrated auxiliary tank, provided on the truck side, via a central through hole 6a and a gas passage 6c in the laminated rubber 6. The gas passage 6c is formed in a boss 6b for mounting on the truck side. In this way, the gas passages 3a and 6c form a gas damping mechanism for input in the vertical direction.

The inner diameters and outer diameters of the laminated rubber 6 are all shown as equivalent in FIG. 1, yet these are not particularly limited.

Note that in Fig. 1 the entire device constituted by providing such a laminated rubber 6 on the lower face plate 3 of the air spring 5 is referred to as the air spring device 1.

Furthermore, in the air spring 5 shown in FIG. 1, a top supporting member 7 is attached to the upper side, in FIG. 1, of the upper face plate 2, and a bottom supporting member 8 is attached to the lower side, in FIG. 1, of the laminated rubber 6. The bottom supporting member 8 includes the lower side boss 6b for mounting and securing below the spring (truck) or the like.

In the air spring device 1, at least one of mutually opposing faces of the upper face plate 2 and the lower face plate 3, both faces in FIG. 1, is provided with sliding plates 2d and 3d of polyethylene resin with a weight average molecular weight of two million or more, preferably two million to three million.

The sliding plates 2d and 3d are formed integrally respectively with the upper face plate 2 and the lower face plate 3 in FIG. 1, yet the upper face plate 2 and the lower face plate 3 may each be formed by a separate component from the sliding plate. It is also possible to form one of the upper face plate 2 and the lower face plate 3 integrally with the sliding plate. Alternatively, the sliding plate may be formed on only one of the upper face plate and the lower face plate.

In this air spring device 1, by filling the air spring 5 and the auxiliary tank to enclose a gas of a predetermined pressure, such as air, an inert gas, or the like, via a gas passage 2b, the air spring 5 can be caused to achieve a predetermined spring function. Also, by having the enclosed gas flow and being displaced between the air spring 5 and the auxiliary tank through the gas passage 6c in response to fluctuation in the load acting on the air spring 5, vibrational input to the air spring 5, or the like, the air spring 5 can be caused to achieve a predetermined damping function based on friction, expansion, and the like of the pressurized gas due to the gas passage 3a.

Furthermore, when the air spring device 1 is mounted onto a railway vehicle or the like, the air spring 5 absorbs vibration of the railway vehicle or the like, bending and deforming in response to input in the horizontal direction in the same direction as the input while suppressing deformation in the vertical direction due to the load from the railway vehicle or the like. The laminated rubber 6 is also subject to large shear deformation due to input in the forward and backward directions. Hence, the entire air spring device can guarantee a large amount of deformation in the horizontal direction. Based on these facts, the air spring 5 can absorb vibration to improve comfort during the ride while the air spring device 1 is allowed to deform sufficiently in the forward and backward directions. As a result, a state with soft spring characteristics due to a small spring coefficient can be maintained up to a certain amount of load, and a state with hard spring characteristics due to a large spring coefficient can be maintained when a large load is applied.

When these face plates 2 and 3 abut due to a large load applied in the vertical direction, puncture of the air spring 5, or the like, the sliding plates 2d and 3d function in order to ensure sufficiently smooth sliding displacement along the horizontal surfaces of the face plates 2 and 3. Furthermore, a large displacement in the forward and backward directions is absorbed by sliding displacement based on the action of the sliding plates 2d and 3d.

In a conventional air spring, the material used on the face plates is generally fluorocarbon polymer (PTFE: polytetrafluoroethylene), yet the coefficient of friction of the fluorocarbon polymer is approximately 0.15.

By contrast, in the present invention, the sliding plates 2d and 3d are formed from two million to three million polyethylene resin, and hence face plates with improved sliding characteristics and a coefficient of friction of 0.1 to 0.15, for example, can be achieved.

In other words, upon exceeding three million, moldability and workability worsen, so that the sliding plates do not become smooth but rather warp, which may cause the coefficient of friction to increase. If the weight average molecular weight is less than two million, the sliding plates cannot be made sufficiently hard, causing the sliding plates themselves to deform. Therefore, the coefficient of friction becomes 0.15 or more, and friction increases.

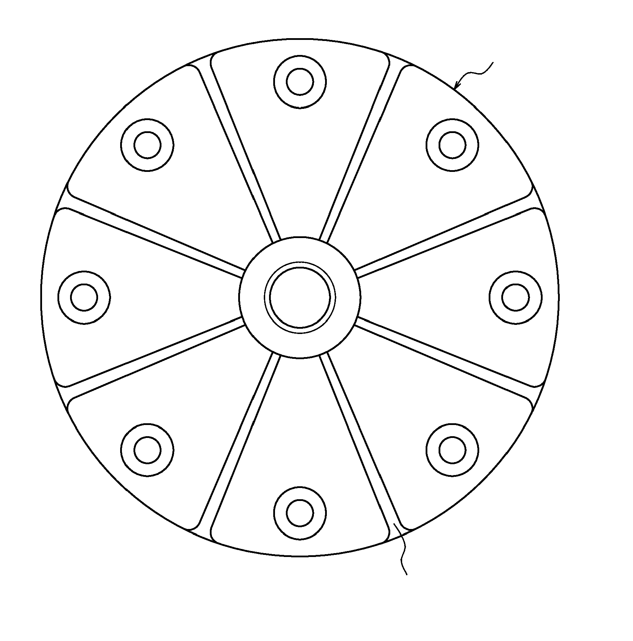

Note that, as illustrated in FIG. 2, one or more grooves 3e extending radially from the center of the sliding plate are preferably provided on the gas-chamber-facing side of the sliding plates 2d and 3d, which are provided on at least one of opposing faces of the upper face plate 2 and the lower face plate 3. With this structure, a passage can be guaranteed when gas, such as air, is enclosed in the air spring 5. Grooves can be formed only in the sliding plate(s), or grooves of a depth reaching the upper face plate 2 and/or the lower face plate 3 can also be formed.

Here, the grooves 3e are not limited to being linear, but may also extend in a zig-zag shape, a wavy shape, a curved shape, the shape of a crank, or the like.

Furthermore, when at least one of the upper face plate 2 and the lower face plate 3 is formed integrally with the sliding plates 2d and 3d, it is not necessary to adhere or otherwise attach the upper face plate 2 and the lower face plate 3 respectively to the sliding plates 2d and 3d. Hence, the number of manufacturing steps can be reduced, thus increasing productivity. Also, when the upper face plate slides while abutting the opposing lower face plate, there is no risk of the sliding plate detaching from the at least one of the upper face plate and the lower face plate with which the sliding plate is integrally formed. The sliding plate can also be suppressed from becoming displaced, in particular in the radial direction of the sliding plate, with respect to the upper face plate and/or the lower face plate with which the sliding plate is integrally formed. In this way, the sliding displacement of the face plates can be further stabilized.

When the sliding plate is formed separately from the upper face plate 2 and/or the lower face plate 3, and grooves with a depth reaching the upper face plate 2 and/or the lower face plate 3 are formed as described above, then due to misalignment of the sliding plate, the grooves may become misaligned at the border between the sliding plate and the upper face plate 2 and/or the lower face plate 3, blocking the flow of the gas. Conversely, by forming the sliding plate integrally with the upper face plate 2 and/or the lower face plate 3, the flow of gas through the grooves can be guaranteed even when the upper face plate 2 and/or the lower face plate 3 are greatly displaced.

Furthermore, since no metal material or the like is used in the upper face plate 2 and the lower face plate 3, the air spring can be reduced in weight.

### EXAMPLES

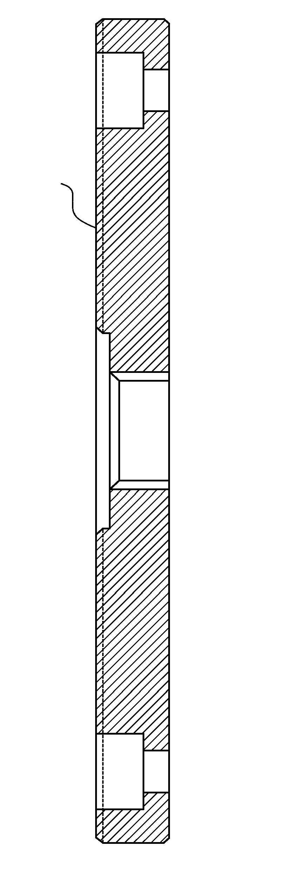

Next, prototypes having the structure illustrated in FIGS. 1 to 3 were produced: an example air spring device having a lower face plate of polyethylene resin with a molecular weight of two million (GUR UHMW-PE 5113 by Ticona), a comparative example air spring device 1 having a lower face plate of polytetrafluoroethylene resin (Pilaflon G4 by NIPPON PILLAR PACKING Co., Ltd.), and a comparative example air spring device 2 having a lower face plate of polyethylene resin with a molecular weight of 100,000 (HI-ZEX 2100J by Prime Polymer Co., Ltd.). The coefficient of friction of each prototype was then assessed. Note that in the example air spring device and the comparative example air spring devices 1 and 2, the upper face plate was made from metal material, and the lower face plate was formed integrally with the sliding plate, so that the lower face plate itself constituted the sliding plate.

For the present invention, no alterations to the structure of the air spring device are necessary apart from the upper face plate and the lower face plate, and therefore the structure was nearly similar to that of a conventional air spring device.

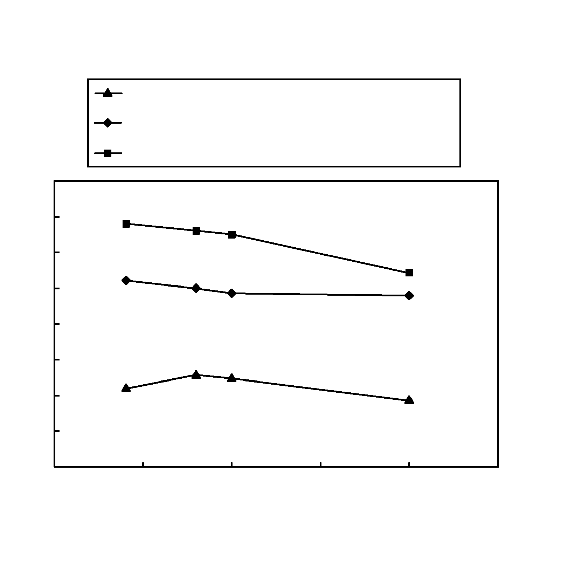

The example air spring device and the comparative example air spring devices 1 and 2 were vibrated in the horizontal direction at various speeds with a vertical load of 50 KN applied thereto, and the coefficient of friction was measured. FIG. 4 shows the measurement results.

As is clear from the results in FIG. 4, the example air spring device allowed for a reduction in the coefficient of friction as compared to the comparative example air spring devices 1 and 2.

### REFERENCE SIGNS LIST

- 1:: Air spring device
- 2:: Upper face plate
- 2a:: Boss
- 2b:: Gas passage
- 2d, 3d:: Sliding plate
- 3e:: Groove
- 3:: Lower face plate
- 3a:: Gas passage
- 4:: Cylindrical flexible film body
- 5:: Air spring
- 6:: Laminated rubber
- 6a:: Central through hole
- 6b:: Boss for mounting
- 6c:: Gas passage
- 7:: Top supporting member
- 8:: Bottom supporting member

## Claims

1. An air spring comprising:
an upper face plate;
a lower face plate; and
a cylindrical flexible film body with ends respectively connected air-tightly to the upper face plate and the lower face plate,
a pressurized gas of a pressure equal to or greater than atmospheric pressure being sealed within the air spring, and
a sliding plate of polyethylene resin with a weight average molecular weight of two million or more being provided on at least one of mutually opposing faces of the upper face plate and the lower face plate.

2. The air spring according to claim 1, the sliding plate of polyethylene resin including one or more grooves extending radially from a center of the sliding plate.

3. The air spring according to claim 1 or 2, the sliding plate being formed integrally with at least one of the upper face plate and the lower face plate.
